# EUROPÄISCHE PATENTSCHRIFT

(11) **EP 3 031 658 B1**
(45) Veröffentlichungstag und Bekanntmachung des Hinweises auf die Patenterteilung: **18.03.2020**
(21) Anmeldenummer: 14197729.8
(22) Anmeldetag: 12.12.2014
(51) Int. Cl.: B60L 5/42, B60L 53/14, B60L 53/30, B60L 53/36, B60L 53/60, B60L 53/65, B60L 53/66

(54) **Ladeverfahren für einen Energiespeicher eines Fahrzeugs**
Charging method for an energy storage device of a vehicle
Procédé de chargement d'un accumulateur d'énergie pour un véhicule

(43) Veröffentlichungstag der Anmeldung: 15.06.2016
(73) Patentinhaber: Siemens Mobility GmbH, 81739 München (DE)
(72) Erfinder: Bolik, Ulrich, 46240 Bottrop (DE); Laske, Andreas, 10318 Berlin (DE); Mulligan, Liam, D6 Dublin (IE); Schmitt, Anton, 85591 Vaterstetten (DE)

(56) Entgegenhaltungen:
- EP-A1- 2 752 331
- EP-A2- 1 760 486
- DE-A1-102011 078 836
- DE-A1-102012 012 860
- DE-T2- 60 316 818
- US-A- 5 596 258
- US-A1- 2013 193 918
- US-B2- 8 324 858
- Association Avem ET AL: "Projet TOSA - Le bus électrique à recharge ultra-rapide sera testé à Genève", , 29. April 2013 (2013-04-29), XP055190800, Internet Gefunden im Internet: URL:http://www.avem.fr/actualite-projet-to sa-le-bus-electrique-a-recharge-ultra-rapi de-sera-teste-a-geneve-4069.html [gefunden am 2015-05-21]
- jmcfarland99: "Proterra EcoRide at Foothill.m4v", , 27. April 2011 (2011-04-27), XP054975878, Gefunden im Internet: URL:https://www.youtube.com/watch?v=zKM8v0 Vdasc [gefunden am 2015-05-26]

## Beschreibung

Die Erfindung betrifft ein Ladeverfahren für einen Energiespeicher eines Fahrzeugs mittels einer Ladestation. Des Weiteren betrifft die Erfindung eine Ladestation, ein Fahrzeug, sowie ein System aufweisend mindestens ein Fahrzeug und mindestens eine Ladestation.

Durch die Notwendigkeit CO₂ zu reduzieren, denken die Verantwortlichen einer wachsenden Anzahl von Städten darüber nach, den ÖPNV (öffentlichen Personennahverkehr) auf Fahrzeuge, insbesondere Busse, umzustellen, die entweder rein elektrisch fahren oder zumindest mit Hybrid-Antrieben ausgerüstet sind. Da die derzeitige Energiedichte der Batterien noch nicht ausreicht um die Energiemenge zu speichern, die notwendig ist, um die Fahrzeuge in einen Tagesumlauf zu schicken, besteht der Bedarf des Nachladens der Energiespeicher an im Aktionsbereich verteilten stationären Ladestationen. Ladestationen für den Bedarf der oben genannten Fahrzeuge sind derzeit nicht vorhanden.

Bereits existierende Ladestationen für den Individualverkehr zeichnen sich in erster Linie durch ein geringes Bauvolumen aus, das zum Beispiel einen Einbau in einer Garage ermöglicht. Darüber hinaus bietet das geringe Bauvolumen die Möglichkeit, entsprechende Stationen auf öffentlichen oder privaten Parkplätzen nachzurüsten, um dort die Ladung von Fahrzeugen zu ermöglichen. Die genannten Orte der Ladestationen ergeben sich auch aus der Tatsache, dass für die Ladung ein deutlich längerer Zeitraum erforderlich ist im Vergleich zu einer Betankung mit herkömmlichen Kraftstoffen wie Benzin, Diesel oder Gas. Bei den derzeitigen Ladestationen erfolgt der Kontakt zwischen der Station und dem Fahrzeug über ein Kabel und einem Steckersystem, welches die sichere Stromübertragung gewährleistet.

Als weiterer Stand der Technik für elektrisch betriebene Fahrzeuge sind Straßenbahnen und Oberleitungsbusse (auch als O-Busse oder Trolleybusse bezeichnet) zu nennen. Diese haben im Allgemeinen keinen Energiespeicher an Bord, der es ermöglicht, längere Entfernungen ohne Energieversorgung von außen zurückzulegen. Die Übertragung der elektrischen Energie erfolgt kontinuierlich während des Betriebs aus einer Oberleitung mittels eines Stromabnehmers am Fahrzeug.

Für den Ladevorgang existieren weiterhin verschiedene Randbedingungen. So sollte beispielsweise der Ladevorgang möglichst kurz sein. Aus diesem Grund ist eine hohe Ladeleistung erforderlich. Die geforderte Ladeleistung liegt oftmals oberhalb von 100 kW, teilweise sogar deutlich oberhalb von 100 kW. Weiterhin sollte dem Fahrzeugführer vorzugsweise keine Handhabung von kabelgebundenen Steckverbindungen und dergleichen zugemutet werden. Zum einen sind beispielsweise die zugehörigen Kabel und Stecker aufgrund der erforderlichen hohen Spannungen, Ströme und Leistungen relativ schwer und voluminös. Des Weiteren dürfen Passanten im Bereich des Straßenfahrzeugs nicht in Gefahr gebracht werden und sollten möglichst auch nicht behindert werden. Ein weiterer Aspekt ist, dass das Gesamtgewicht des Straßenfahrzeugs ein kritischer Faktor ist. Daher sollte das dem Ladevorgang zu Grunde liegende Prinzip derart gewählt sein, dass auf dem Straßenfahrzeug möglichst wenige zusätzliche Komponenten installiert werden müssen.

Aus der DE 10 2013 201 491 A1 ist eine Vorrichtung zum Übertragen elektrischer Energie an ein Fahrzeug bekannt. Zur einfachen, sicheren und schnellen Energieübertragung wird vorgeschlagen, dass die Vorrichtung dabei derart an einer stationären Ladestation angebracht ist, dass die elektrisch leitende Verbindung durch eine Bewegung eines landseitigen Stromabnehmers auf eine Kontaktfläche am Fahrzeug erzeugt wird.

Aus der DE 10 2011 078 836 A1 ist eine Fahrzeugladevorrichtung zum externen Laden einer fahrzeuggebundenen Batterie eines Fahrzeugs bekannt, das eine Ladeeinrichtung beinhaltet.

Die Ladeeinrichtung beinhaltet dabei einen ladeeinrichtungsgebundenen Erfassungsabschnitt, der einen Ladebedarfszustand eines betreffenden Fahrzeugs vor einer Ladeverbindung eines Ladeeinrichtungsverbinders der Ladeeinrichtung mit dem fahrzeuggebundenen Ladeeinlass des betreffenden Fahrzeugs erfasst.

Aus der US 5 596 258 A ist eine Ladevorrichtung und ein Verfahren zum Laden einer Batterie eines batteriegetriebenen Fahrzeugs bekannt. Dabei wird bei Auftreten eines außergewöhnlichen Kommunikationszustandes zwischen Ladeseite und einer Ladestation und Batterieseite des elektrischen Fahrzeugs für die Energieversorgung der Ladevorrichtung ein spezieller Lademodus gestartet.

Der Erfindung liegt die Aufgabe zugrunde, ein sicheres Ladeverfahren für einen Energiespeicher eines Fahrzeugs anzugeben, das einfach und kostengünstig realisierbar ist.

Diese Aufgabe wird durch ein Ladeverfahren mit den Merkmalen des Anspruchs 1 gelöst. Diese Aufgabe wird weiter durch eine Ladestation mit den Merkmalen des Anspruchs 5 gelöst. Diese Aufgabe wird weiter durch ein Fahrzeug mit den Merkmalen des Anspruchs 8 gelöst. Des Weiteren wird diese Aufgabe durch ein System mit den Merkmalen des Anspruchs 10 gelöst.

Vorteilhafte Ausgestaltungen der Erfindung sind in den abhängigen Ansprüchen angegeben.

Der Erfindung liegt die Erkenntnis zugrunde, dass sich der Ladevorgang besonders einfach gestalten lässt, wenn der Zustand des Haltens des Fahrzeugs über den Zustand der Parkbremse ermittelt wird. Für den Fall, dass die Parkbremse angelegt, d.h. aktiviert ist, kann sicher davon ausgegangen werden, dass sich das Fahrzeug im Stillstand befindet. Die Parkbremse ist im Gegensatz zu der durch das Bremspedal betätigten Bremse (Betriebsbremse) eine Bremse, die das Fahrzeug nach dem Einlegen bzw. Aktivieren auch ohne weitere Handlung des Fahrers im Stillstand hält. Der Fahrer kann beispielsweise nach Aktivieren der Parkbremse das Fahrzeug verlassen. Die Parkbremse wird oft auch als Feststellbremse, Handbremse oder Haltestellenbremse bezeichnet. Auch die Position P eines automatischen Getriebes gilt in diesem Zusammenhang als Parkbremse. Um die Information über das Anliegen einer Parkbremse an die Steuerung einer Ladestation zu übertragen, wird hierfür eine drahtlose Kommunikation zwischen Fahrzeug und Ladestation genutzt. Damit kann eine Freigabe für den Ladevorgang durch die Steuerung der Ladestation generiert werden. Die Freigabe ist eine Voraussetzung, um den Ladevorgang des Energiespeichers auf dem Fahrzeug starten zu können. Unter Ladevorgang wird das Einspeisen von elektrischer Energie in den Energiespeichern des Fahrzeugs verstanden. Freigabe bedeutet, dass von der Steuerung der Leistungsfluss zwischen Ladestation und Fahrzeug durchgeführt werden darf. Bei fehlender Freigabe ist der Leistungsfluss zu verhindern. Für den Fall, dass ein Leistungsfluss bereits besteht, ist dieser bei fehlender oder wegfallender Freigabe zu beenden.

Die drahtlose Kommunikation zwischen einer fahrzeugseitigen Kommunikationseinrichtung und einer Kommunikationseinrichtung der Ladestation kann dabei so ausgestaltet sein, dass die drahtlose Kommunikation nur aufgebaut wird, wenn das Fahrzeug sich in der Nähe der Ladestation befindet. Dafür sind die Reichweiten der Funkverbindung entsprechend auszulegen. Erfahrungen haben gezeigt, dass der Fahrer eines Fahrzeugs dieses auch ohne weitere Maßnahmen oder Hilfsmittel an einer Ladestation derart genau positionieren kann, dass die Aufladung des Fahrzeugs an der Ladestation durchgeführt werden kann. Insbesondere bei Bussen hat es sich gezeigt, dass der Busfahrer eine Haltestelle so anfährt, dass der Bus derart an der Haltestelle positioniert ist, dass eine Ladung mittels der Ladestation durchgeführt werden kann. Darüber hinaus hat sich gezeigt, dass die genaue Positionierung des Busses durch den Fahrer besonders einfach durchführbar ist, wenn an der Haltestelle, an der auch eine Ladestation vorhanden ist, eine eigene Bucht für den Bus zum Halten vorhanden ist.

Als besonders vorteilhaft hat es sich erwiesen, für den Fall, dass das Fahrzeug ein Bus ist, zumindest eine Ladestation an der Endhaltestelle zu platzieren. Damit kann der Ladevorgang in der Pausenzeit des Fahrers einfach durchgeführt werden. Darüber hinaus steht im Vergleich zu einem Halt an einer anderen Haltestelle dem Ladevorgang an der Endhaltestelle eine längere Zeit zur Verfügung. Es hat sich herausgestellt, dass in einer besonders vorteilhaften Ausgestaltung mit dem erfindungsgemäßen Verfahren Ladezeiten in der Größenordnung von sechs Minuten erreichbar sind.

Der Vorteil der Erfindung liegt darin, dass auf Sensoren, die den Stillstand des Fahrzeugs erfassen, verzichtet werden kann. Damit ist das erfindungsgemäße Verfahren sowie die erfindungsgemäße Ladestation einfach und kostengünstig realisierbar. Sensoren für das Erfassen des Zustandes der Feststellbremse sind heutzutage üblich für eine optische Anzeige, so dass hier keine weiteren Kosten für die Zustandsermittlung entstehen. Darüber hinaus ist die Erfassung des Zustands der Parkbremse weitaus weniger anfällig für Ausfälle im Gegensatz zu Sensoren, die den Stillstand eines Fahrzeugs erkennen.

Dabei wird mittels der drahtlosen Kommunikation ermittelt, ob sich das Fahrzeug in einem festgelegten Bereich in der Nähe der Ladestation befindet. Die drahtlose Kommunikation kann dazu genutzt werden, die Position des Fahrzeugs in der Nähe der Ladestation zu bestimmen. Neben der Dimensionierung der Reichweite der Kommunikationseinrichtungen können dazu sowohl an der Ladestation als auch im Fahrzeug Antennen verwendet werden, die eine Richtcharakteristik aufweisen. Mit dieser Richtcharakteristik kommt die drahtlose Kommunikation nur zustande, wenn die Antennen in einer bestimmten Ausrichtung zueinander stehen. Dies ist dann der Fall, wenn das Fahrzeug in einem Bereich an der Ladestation steht, in der ein Aufladen möglich ist. Darüber hinaus hat es sich als vorteilhaft erwiesen, mehr als eine Antenne im Fahrzeug und/oder an der Ladestation anzuordnen. Durch die entsprechenden Richtcharakteristiken der einzelnen Antennen kann die Position des Fahrzeugs noch genauer bestimmt werden. Aus diesen Informationen lässt sich ermitteln, ob sich das Fahrzeug in einem Bereich einer Ladestation befindet, in der eine Ladung möglich ist. Darüber hinaus erlaubt die Verwendung von mehr als einer Antenne für die drahtlose Kommunikation die Informationsübertragung redundant zu gestalten. So kann auch bei Ausfall einer Antenne noch immer eine drahtlose Kommunikation zwischen Fahrzeug und Ladestation aufgebaut werden. Bei der Ermittlung der Position des Fahrzeugs mittels der drahtlosen Kommunikation werden keine Sensoren, insbesondere Abstandssensoren, mehr benötigt um die Position des Fahrzeugs an der Ladestation hinreichend genau zu bestimmen. Da diese Sensoren eine nicht zu vernachlässigende Ausfallwahrscheinlichkeit besitzen, kann durch die Verwendung der drahtlosen Kommunikation für die Positionsbestimmung die Ladestation zum einen kostengünstig aufgebaut als auch zuverlässig betrieben werden.

Dabei liegt die Freigabe für den Ladevorgang des Energiespeichers vor, wenn der Fahrzeugaufbau mittels einer elektrischen Verbindung zwischen Ladestation und Fahrzeug mit einem elektrischen Bezugspotential, insbesondere dem Erdpotential, verbunden ist. Für eine sichere Ladung des Energiespeichers muss sichergestellt werden, dass es zu keinen Personenschäden kommen kann, wenn eine Person das Fahrzeug während dem Ladevorgang berührt. Dies ist insbesondere dann von Bedeutung, wenn die für die Ladung des Energiespeichers verwendete Spannung derart groß ist, dass diese Personenschäden verursachen kann. Gleichzeitig sind für die Realisierung von kurzen Ladezeiten hohe Spannungen erforderlich. Um die hohe Spannungen für die Ladung realisieren zu können, muss sichergestellt werden, dass das Fahrzeug ein elektrisches Potential besitzt, welches dem Erdpotential entspricht oder zumindest sich nicht derartig vom Erdpotential unterscheidet, dass es zu unbeabsichtigten, gefährlichen Strömen durch Personen kommen kann. Dazu wird der Aufbau des Fahrzeugs mit einem Bezugspotential verbunden. Im Besonderen eignet sich das Erdpotential als Bezugspotential. Um dies zu realisieren, weist die Ladestation einen ersten Kontakt auf, dessen elektrisches Potential dem Bezugspotential entspricht. Dieses ist während des Ladevorgangs mit dem Fahrzeug elektrisch verbunden. Innerhalb des Fahrzeugs wird sichergestellt, dass der Fahrzeugaufbau mit diesem elektrischen Bezugspotential verbunden ist. Zum Fahrzeugaufbau zählen die meist metallische Außenhaut des Fahrzeugs, auch als Karosserie bezeichnet, sowie auch Teile, insbesondere elektrisch leitfähige Teile, des Fahrzeuginnern. Damit kann ausgeschlossen werden, dass Personen in der Umgebung des Fahrzeuges allein durch die Berührung des Fahrzeugs in Gefahr geraten. Insbesondere für Busse, in denen Personen ein- und aussteigen, kann damit eine hinreichende Sicherheit im Hinblick auf Personenschutz erreicht werden.

Dabei liegt die Freigabe für den Ladevorgang des Energiespeichers vor, wenn eine Kontaktierung zwischen Ladestation und Fahrzeug mittels eines Stromflusses zwischen Ladestation und Fahrzeug detektiert wird. Zur Sicherstellung des Berührungsschutzes ist es wichtig, dass der Fahrzeugaufbau mit einem Bezugspotential verbunden ist. Dieser wird durch die Kontaktierung eines ersten Kontaktes der Ladestation mit dem Fahrzeug sichergestellt. Um das Verfahren besonders sicher zu gestalten, wird mit einem zweiten Kontakt geprüft, ob die Kontaktierung zwischen Ladestation und Fahrzeug durch den ersten Kontakt sicher vorhanden ist. Dazu wird ein Strom, ein sogenannter Prüfstrom, durch den zweiten Kontakt der Ladestation erzeugt. Wenn der Prüfstrom zwischen Ladestation und Fahrzeug fließt, kann sicher davon ausgegangen werden, dass die Kontaktierung realisiert ist. Für einen Rückstrom kann der erste Kontakt für das Anlegen der Bezugsspannung an das Fahrzeug genutzt werden. Aufgrund der geringen Stromhöhe des Prüfstroms ist keine nennenswerte Spannungsänderung, hervorgerufen durch den Prüfstrom, zwischen dem Potential des Fahrzeugs und dem Bezugspotential zu erwarten. Um die sichere Verbindung mittels Prüfstrom zu detektieren, kann neben der Strommessung auch eine Spannungsmessung verwendet werden. Dabei hat es sich als vorteilhaft herausgestellt, einen definierten Widerstand in den Stromkreis einzubringen und den durch den Prüfstrom an diesem Widerstand verursachten Spannungsabfall zu messen.

Der Strom kann dabei vom Fahrzeug zusätzlich derart beeinflusst werden, um eine Kommunikation zwischen Fahrzeug und Ladestation herzustellen. Diese einfache Kommunikation kann beispielsweise dazu genutzt werden, im Fehler- oder Gefahrenfall einen Ladevorgang schnell zu beenden. Dazu kann fahrzeugseitig in den Strompfad ein Schalter eingebracht werden, der den Prüfstrom zur Überwachung der sicheren Kontaktierung unterbricht. Damit ist es fahrzeugseitig möglich, den Ladevorgang zu unterbrechen, auch wenn die drahtlose Kommunikation gestört ist.

Bei einer vorteilhaften Ausgestaltungsform der Erfindung wird der Ladevorgang automatisch gestartet, sobald die Freigabe für den Ladevorgang vorliegt. Um den Fahrer eines Fahrzeugs weitestgehend von Handlungen zum Laden des Energiespeichers des Fahrzeugs zu befreien, wird der Ladevorgang automatisch gestartet wenn die Freigabe für den Ladevorgang erfolgt. Damit kann bei Erreichen einer Ladestation und aufgebauter drahtloser Kommunikation zwischen Fahrzeug und Ladestation durch Einlegen der Parkbremse der Ladevorgang automatisch gestartet werden. Gerade für die Anwendung in Bussen mit einer Aufladung an Haltestellen hat es sich als vorteilhaft erwiesen, wenn der Ladevorgang automatisch gestartet wird. Der Fahrer kann sich dann anderen Aufgaben, wie beispielsweise dem Verkauf von Fahrkarten widmen, ohne den Ladevorgang initiieren oder überwachen zu müssen. Des Weiteren hat es sich als vorteilhaft erwiesen, die Ladung des Energiespeichers von Bussen an seinen Endhaltestellen vorzunehmen. Auch hier kann durch den automatischen Ablauf des Ladevorgangs der Fahrer entlastet werden, so dass er diese Zeit des Ladens als Pausenzeit nutzen kann.

Bei einer weiteren vorteilhaften Ausgestaltungsform der Erfindung wird der Ladevorgang beendet, wenn die Parkbremse des Fahrzeugs deaktiviert wird. Um sicher auszuschließen, dass während des Ladevorgangs ein Fahrzeug sich von der Ladestation entfernt, hat es sich als vorteilhaft erwiesen, den Ladevorgang zu beenden, wenn die Parkbremse des Fahrzeugs deaktiviert, d.h. gelöst, wird. Durch das Deaktivieren der Bremse ist davon auszugehen, dass sich das Fahrzeug gewollt oder ungewollt in Bewegung setzen kann. Um zu verhindern, dass die für die Ladung notwendigen, spannungsbehafteten Kontakte mit dem Fahrzeugaufbau in Berührung kommen, wird der Ladevorgang mit dem Deaktivieren der Parkbremse unterbrochen. Dies hat den Vorteil, dass der Fahrer das Ende des Ladevorgangs nicht selbst einleiten muss. Darüber hinaus kann ein Vergessen der Beendigung des Ladevorgangs und damit einhergehende Beschädigungen des Systems oder Verletzungen von Personen zuverlässig ausgeschlossen werden. Insbesondere wenn es sich bei dem Fahrzeug um einen Bus handelt kann der Fahrer von Aufgabe zur Überwachung der Ladung entlastet werden.

Bei einer weiteren vorteilhaften Ausgestaltungsform der Erfindung weist die Ladestation einen dritten Kontakt und einen vierten Kontakt auf, die während des Ladevorgangs mit dem Fahrzeug derart verbunden sind, dass über den dritten und vierten Kontakt elektrische Energie von der Ladestation zum Energiespeicher des Fahrzeugs übertragbar ist. Es hat sich als sinnvoll erwiesen, wenn an der Ladestation schon ein erster und ein zweiter Kontakt vorhanden sind, um den Fahrzeugaufbau vor unzulässigen Berührungsspannungen zuverlässig zu schützen einen dritten und einen vierten Kontakt vorzusehen, mit denen die Ladung des Energiespeichers erfolgt. Diese Kontakte sind derart auszulegen, eine hohe Spannung und entsprechend hohe Ströme an das Fahrzeug zu übertragen, mit denen eine kurze Ladezeit des Energiespeichers erzielt wird. Dabei haben sich Spannungswerte von ca. 450 V bis 750 V DC zwischen dem dritten und vierten Kontakt als besonders günstig erwiesen. Ebenso haben sich Ströme von 200 A, 400 A sowie 600 A als günstig für das Laden des Energiespeichers erwiesen. Somit kann eine sichere und schnelle Ladung mit Hilfe von vier Kontakten an der Ladestation und entsprechenden Aufnahmekontakten am Fahrzeug auf einfache Weise realisiert werden.

Bei einer weiteren vorteilhaften Ausgestaltungsform der Erfindung weist die Ladestation mindestens eine Befestigungsschiene auf, an der mindestens ein Kontakt angeordnet ist. Mit Hilfe der Befestigungsschiene kann ein Kontakt auf besonders einfache Weise an einer Ladestation angeordnet werden. Der Kontakt ist dann vorteilhafterweise streifenförmig ausgebildet. Als besonders vorteilhaft hat es sich erwiesen, mehrere Kontakte auf einer Befestigungsschiene anzuordnen, wobei die Kontakte elektrisch voneinander isoliert sind. Die Befestigungsschiene kann auf einfache Weise mittels Isolatoren sicher und zuverlässig von der Ladestation elektrisch isoliert werden. Mit Hilfe von Befestigungsschienen ist es auf einfache Weise möglich, die Ladestation mit dem Fahrzeug in Kontakt zu bringen. Dazu ist ladestationsseitig oder fahrzeugseitig eine Vorrichtung zu realisieren, die durch eine Bewegung die Kontakte der Ladestation und die Aufnahmekontakte des Fahrzeugs in Berührung bringt.

Bei einer weiteren vorteilhaften Ausgestaltungsform der Erfindung weist die Ladestation zwei parallel angeordnete Befestigungsschienen auf, an der jeweils zwei Kontakte angeordnet sind, wobei die jeweils zwei Kontakte der Befestigungsschienen jeweils voneinander elektrisch isoliert sind. Mit dieser Anordnung lassen sich auf relativ geringem Raum mindestens vier Kontakte unterbringen. Die dann streifenförmig auf der Befestigungsschiene angeordneten Kontakte lassen sich auf besonders einfache Weise mit dem Fahrzeug in Verbindung bringen. Durch das Anbringen der Kontakte auf Befestigungsschienen kann eine hohe Toleranz in Bezug auf die Positionierung des Fahrzeugs an der Ladestation erreicht werden. Gleichzeitig ist der Materialansatz bei der Herstellung von Kontakten und Befestigungsschienen relativ gering. Somit kann durch die Verwendung zweier paralleler Befestigungsschienen eine Ladestation kostengünstig und gewichtsarm realisiert werden, die gleichzeitig nur geringe Anforderung an die Genauigkeit der Positionierung des Fahrzeugs an der Ladestation erfordert.

Als besonders vorteilhaft hat es sich erwiesen, wenn die Ladestation einen Stromabnehmer aufweist, mit dem zumindest ein Kontakt der Ladestation mit dem Fahrzeug in Verbindung gebracht werden kann. Um das Gewicht des Fahrzeugs weitestgehend zu minimieren hat es sich als sinnvoll erwiesen, den Stromabnehmer als Vorrichtung, welche die Kontakte der Ladestationen und die Aufnahmekontakte des Fahrzeugs in Verbindung bringt, an der Ladestation anzuordnen. Damit wird zum einen zusätzliches Gewicht auf dem Fahrzeug vermieden und knapp bemessener Bauraum am Fahrzeug wird nicht für zusätzliche Komponenten wie einen Stromabnehmer verbraucht. Dies wirkt sich insbesondere günstig auf die Herstellung der Fahrzeuge aus.

Bei einer weiteren vorteilhaften Ausgestaltungsform der Erfindung ist der Stromabnehmer derart ausgebildet, dass dieser den zumindest einen Kontakt der Ladestation derart absenkt um das Fahrzeug kontaktieren zu können und wobei der Stromabnehmer derart ausgebildet ist, dass in einer Ruheposition des Stromabnehmers der zumindest eine Kontakt des Stromabnehmers sich in einer Höhe befindet, die eine Verbindung mit dem Fahrzeug verhindert. Dies hat den Vorteil, dass bei Verlust der Ansteuerung, beispielsweise durch Stromausfall, der Stromabnehmer nicht allein aufgrund seiner Gewichtskraft auf dem Fahrzeug anliegt und eine Verbindung zum Fahrzeug schafft. In diesem Fall wäre ein Verlassen des Fahrzeugs von der Ladestation nicht möglich. Um auch bei einem Stromausfall oder anderem Fehlerfall der Ladestation das Fahrzeug von der Ladestation wegbewegen zu können, ohne Beschädigungen am Stromabnehmer zu verursachen, hat es sich als vorteilhaft erwiesen, wenn beispielsweise durch eine Feder oder durch ein Gegengewicht bei Ausfall der Ansteuerung der Stromabnehmer in seiner Ruhelage, d.h. ohne Ansteuerung von außen, in eine Position bewegt und/oder gehalten wird, in der der Stromabnehmer mit dem Fahrzeug nicht mehr in Berührung ist. In diesem Fall kann das Fahrzeug die Ladestation gefahrlos verlassen.

Bei einer weiteren vorteilhaften Ausgestaltungsform weist der Bus mindestens eine Schiene zur Kontaktierung mit mindestens einem Kontakt mindestens einer Befestigungsschiene der Ladestation auf, wobei die Schiene des Busses derart angeordnet ist, dass die Schiene des Busses und die Befestigungsschiene der Ladestation während der Kontaktierung im wesentlichen rechtwinklig zueinander angeordnet sind. Durch die Anordnung der Kontakte der Ladestation auf Befestigungsschienen und die Verwendung für Schienen am Fahrzeug für die Kontaktierung sind die entsprechenden Kontaktflächen sowohl fahrzeugseitig als auch ladestationsseitig streifenförmig ausgelegt. Wenn diese streifenförmigen Kontaktierungsflächen während der Kontaktierung rechtwinklig zueinander angeordnet sind, ergibt sich bei relativ geringen Materialeinsatz für die Kontaktierungsflächen ein relativ großer Toleranzbereich für die Positionierung des Fahrzeugs indem eine elektrische Verbindung zwischen Ladestation und Fahrzeug sicher hergestellt werden kann. Der geringe Materialeinsatz führt zu einer kostengünstigen Realisierung der Kontakte sowohl fahrzeugseitig als auch ladestationsseitig. Darüber hinaus erhöhen die Schienen das Gewicht des Fahrzeugs nur unwesentlich. Auch lassen sich die Schienen durch einfache Maßnahmen am Design des Fahrzeugs in das Erscheinungsbild des Fahrzeugs einfach integrieren.

Im Folgenden wird die Erfindung anhand der in den Figuren dargestellten Ausführungsbeispiele näher beschrieben und erläutert. Dabei zeigen:
- FIG 1: ein System mit Fahrzeug und Ladestation,
- FIG 2: ein Fahrzeug an der Ladestation und
- FIG 3: einen Stromabnehmer im Zustand der Kontaktierung mit dem Fahrzeug.

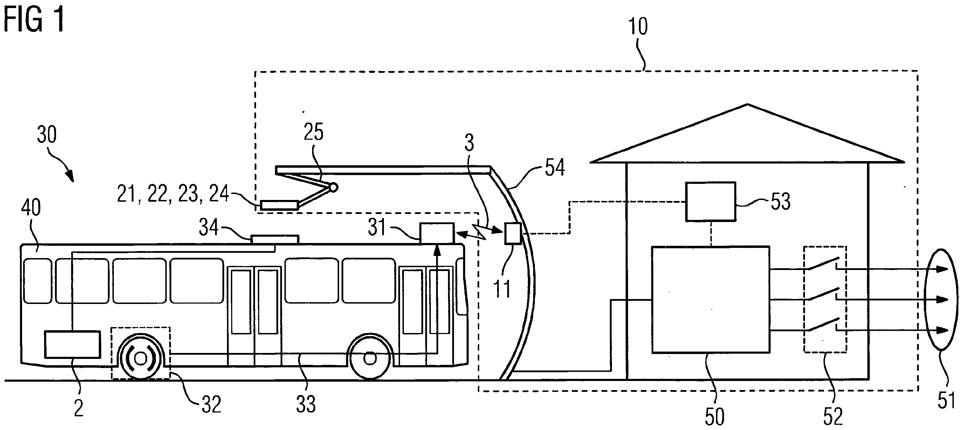

FIG 1 zeigt eine Ladestation 10 und ein Bus 30 mit Energiespeicher 2. Die Ladestation 10 weist einen Mast 54 auf, an den ein Stromabnehmer 25 befestigt ist. Mit dem Stromabnehmer 25 können die Kontakte 21, 22, 23, 24 der Ladestation 10 mit einer Schiene 34 des Fahrzeugs in Kontakt gebracht werden. Am Mast 54 der Ladestation 10 ist eine Kommunikationseinrichtung 11 der Ladestation 10 angebracht. Mit dieser Kommunikationseinrichtung 11 der Ladestation 10 kann eine drahtlose Kommunikation 3 zu einer fahrzeugseitigen Kommunikationseinrichtung 31 des Fahrzeugs 30 hergestellt werden. Die Ladestation 10 umfasst weiter einen Stromrichter 50 der über einen Schalter 52 mit einem Energieversorgungsnetz 51 verbunden ist. Zur Ladung des Energiespeichers 2 wandelt der Stromrichter 50 die Netzspannung des Energieversorgungsnetzes 51 derart um, das an dem dritten und vierten Kontakt 23, 24 der Ladestation 10 eine Spannung anliegt, die es erlaubt, den Energiespeicher 2 des Fahrzeugs 30 aufzuladen. Der dritte Kontakt 23 und der vierte Kontakt 24 sind dabei mit dem Stromrichter 50 verbunden. Die an diesen Kontakten anliegende Spannung wird durch eine Regelung 53 der Ladestation 10 geregelt. Als Eingangsgrößen für die Regelung 53 dienen Werte die mittels der drahtlosen Kommunikation 3 vom Fahrzeug 30 an die Regelung 53 der Ladestation übermittelt werden. Unter anderem kann hieraus erkannt werden, wieweit der Speicher 2 des Fahrzeugs 30 bereits geladen ist. Der Schalter 52 erlaubt den Stromrichter 50 der Ladevorrichtung und damit auch den dritten und vierten Kontakt 23, 24 vom Energieversorgungsnetz zu trennen. Beim Energieversorgungsnetz hat es sich als besonders günstig erwiesen, ein dreiphasiges Widerspannungsnetz von 400V oder ein dreiphasiges Mittelspannungsnetz von 10kV, 50Hz oder 60Hz zu verwenden. Das Fahrzeug 30 weist neben dem Energiespeicher 2 eine Schiene 34 zur Kontaktierung mit der Ladestation 10 auf. Die Schiene 34 zur Kontaktierung ist mit dem Energiespeicher 2 verbunden. Ein weiterer Anschluss der Schiene 34 ist mit der Fahrzeugstruktur 40 verbunden. Diese Verbindung ist in der FIG 1 der Übersichtlichkeit wegen nicht dargestellt. Es ist vorgesehen, dass der erste Kontakt 21 der Ladestation 10 elektrisch leitend mit dem Fahrzeugaufbau 40 derart verbunden ist, das der Fahrzeugaufbau 40 das elektrische Potential des ersten Kontaktes 21 annimmt. So wird, wie eingangs beschrieben, die Berührsicherheit des Fahrzeugs 30 sichergestellt und Personenschäden durch einen elektrischen Schlag sicher vermieden. Des Weiteren weist das Fahrzeug 30 eine fahrzeugseitige Kommunikationseinrichtung 31 auf. Diese dient der Herstellung einer drahtlosen Kommunikation 3 zur Ladestation 10. Das Fahrzeug 30 weist darüber hinaus eine Parkbremse 32 auf. Diese ist in der FIG 1 als Bremse für die Hinterachse dargestellt. Sie kann aber auch alternativ oder zusätzlich auf die Vorderachse wirken. Auch die Wirkung der Parkbremse auf nur ein Rad oder einzelne Räder des Fahrzeugs 30 ist möglich. Von der Parkbremse 32 wird ein Signal 33 über den Zustand der Parkbremse 32 an die fahrzeugseitige Kommunikationseinrichtung 31 übermittelt. Über die drahtlose Kommunikation 3 gelangt die Information über den Zustand der Parkbremse 32 auch an die Regelung 53 der Ladestation 10. Aus dem Vorhandensein der drahtlosen Kommunikation 3 und dem Zustand der Parkbremse 32 kann die Regelung 53 der Ladestation ermitteln, ob mit dem Ladevorgang begonnen werden kann.

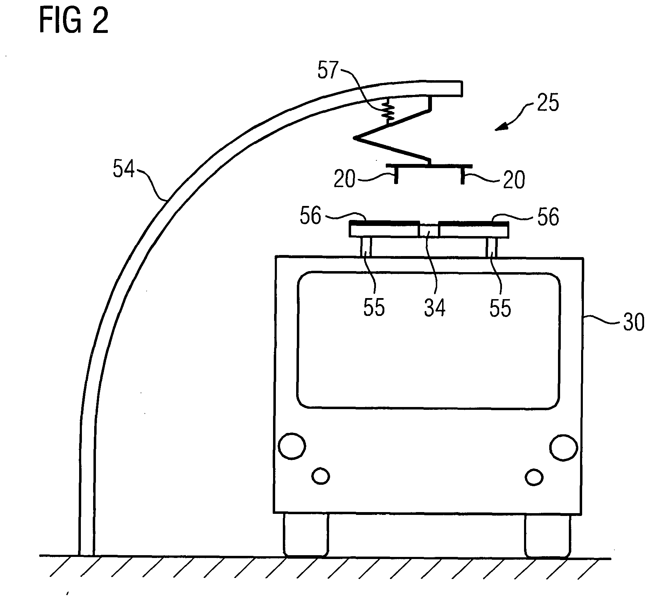

FIG 2 zeigt ein Fahrzeug an einer Ladestation 10. An dem Mast 54 der Ladestation 10 ist ein Stromabnehmer 25 befestigt, der durch Absenken von Befestigungsschienen 20 eine elektrische Verbindung zum Fahrzeug 30 herstellt. Zur Vermeidung von Wiederholungen wird auf die Beschreibung zu der FIG 1 sowie auf die dort eingeführten Bezugszeichen verwiesen. In diesem Ausführungsbeispiel sind die Kontakte 21, 22, 23, 24 aus Gründen der Übersichtlichkeit nicht dargestellt. Die Kontakte 21, 22, 23, 24 sind auch in diesem Ausführungsbeispiel jeweils voneinander isoliert an der Befestigungsschiene 20 angeordnet. Die Schiene 34 des Fahrzeugs 30 zur Kontaktierung ist mittels Isolatoren 55 auf dem Dach des Fahrzeugs 30 befestigt. Die Aufnahmekontakte 56 des Fahrzeugs 30 sind auf der Schiene 34 angeordnet. Die einzelnen Aufnahmekontakte 56 des Fahrzeugs 30 sind jeweils voneinander elektrisch isoliert. Durch Absenken des Stromabnehmers 25 werden die einzelnen Kontakte 21, 22, 23, 24 der Ladestation mit entsprechenden Aufnahmekontakten des Fahrzeugs 30 in Verbindung gebracht. Der Stromabnehmer 25 weist in diesem Ausführungsbeispiel eine Feder 57 auf. Diese Feder 57 stellt sicher, dass der Stromabnehmer 25 sich in einer gehobenen Position befindet, wenn er nicht angesteuert wird. Damit wird beispielsweise bei einem Stromausfall oder einem Fehler in der Ansteuerung verhindert, dass der Stromabnehmer 25 aufgrund seiner Gewichtskraft mit dem Fahrzeug in Berührung bleibt. Im Falle eines Fehlers wie beispielsweise der Unterbrechung der Stromversorgung kann damit das Fahrzeug 30 die Ladestation 10 verlassen ohne dass es zu einer Beschädigung an Komponenten der Ladestation 10 oder des Fahrzeugs 30 kommt.

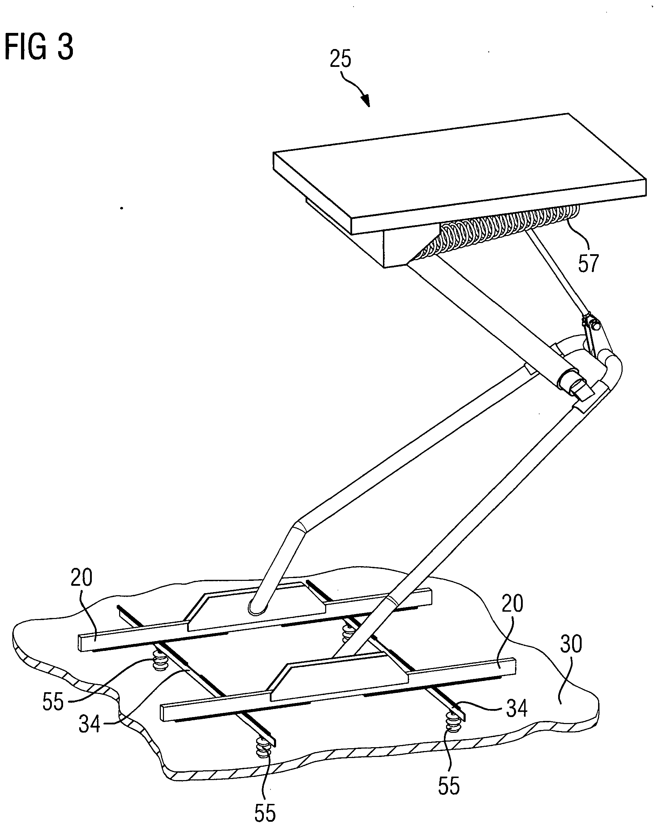

FIG 3 zeigt einen Stromabnehmer 25 in abgesenkter Position, so dass die Befestigungsschienen 20 mit der Schiene 34 des Fahrzeugs in Kontakt stehen. Zur Vermeidung von Wiederholungen wird auf die Beschreibung zu den Figuren 1 und 2 sowie auf die dort eingeführten Bezugszeichen verwiesen. Die einzelnen Kontakte 21, 22, 23, 24 die auf der Befestigungsschiene 20 angeordnet sind, sowie die Aufnahmekontakte 56 des Fahrzeugs 30 sind der Übersichtlichkeit halber nicht dargestellt. Die Schiene 34 zur Kontaktierung ist mittels Isolatoren 55 auf dem Dach des Fahrzeugs 30 befestigt. Es hat sich als besonders vorteilhaft erwiesen, wenn die Befestigungsschienen 20 der Ladestation 10 und die Schienen 34 zur Kontaktierung des Fahrzeugs 30 im Falle der Kontaktierung im Wesentlichen rechtwinklig zueinander angeordnet sind. Mit anderen Worten bilden die Befestigungsschienen 20 der Ladestation und die Schienen 34 zur Kontaktierung ein Rechteck bzw. bei gleichem Abstand der jeweiligen Schienen zueinander ein Quadrat. Damit lässt sich durch relativ geringen Materialeinsatz eine hohe Toleranz bezüglich der Positionierung des Fahrzeugs 30 an der Ladestation 10 erreichen. Die Feder 57 des Stromabnehmers 25 bewirkt, dass sich bei fehlender Ansteuerung, d.h. im Ruhezustand des Stromabnehmers 25, der Stromabnehmer 25 in eine gehobene Position bewegt bzw. dort verbleibt. In dieser Position sind die Befestigungsschienen 20 von den Schienen 34 des Fahrzeugs 30 getrennt, so dass das Fahrzeug 30 die Ladestation 10 verlassen kann, ohne Schäden an Ladestation oder Fahrzeug zu verursachen.

## Patentansprüche

1. Ladeverfahren für einen Energiespeicher (2) eines Fahrzeugs (30) mittels einer Ladestation (10), wobei eine Freigabe für den Ladevorgang des Energiespeichers (2) vorliegt, wenn
- eine drahtlose Kommunikation (3) zwischen einer fahrzeugseitigen Kommunikationseinrichtung (31) und einer Kommunikationseinrichtung (11) der Ladestation (10) besteht,
- eine Parkbremse (32) des Fahrzeugs (30) aktiviert ist, **dadurch gekennzeichnet, dass** die Freigabe für den Ladevorgang des Energiespeichers (2) vorliegt, wenn
- der Fahrzeugaufbau (40) mittels einer elektrischen Verbindung zwischen Ladestation (10) und Fahrzeug (30) mit einem elektrischen Bezugspotential, insbesondere dem Erdpotential, verbunden ist und
- eine Kontaktierung zwischen Ladestation (10) und Fahrzeug (30) mittels eines Stromflusses zwischen Ladestation (10) und Fahrzeug (30) detektiert wird, wobei zur Sicherstellung des Berührschutzes der Fahrzeugaufbau mit dem Bezugspotential verbunden ist, wobei der Berührschutz durch die Kontaktierung eines ersten Kontaktes (21) der Ladestation (10) mit dem Fahrzeug (30) sichergestellt wird, wobei mittels eines Prüfstroms, erzeugt von der Ladestation (10), über einen zweiten Kontakt (22) geprüft wird, ob die Kontaktierung zwischen Ladestation (10) und Fahrzeug (30) durch den ersten Kontakt (21) sicher vorhanden ist, indem für den Rückstrom der erste Kontakt (21) genutzt wird,
wobei die Ladestation einen Stromabnehmer (25) aufweist, mit dem durch Absenken die einzelnen Kontakte (21,22,23,24) der Ladestation (10) mit entsprechenden Aufnahmekontakten (56) des Fahrzeugs (30) verbindbar sind, wobei sowohl an der Ladestation (10) als auch im Fahrzeug (30) Antennen verwendet werden, die eine Richtcharakteristik aufweisen und derart angeordnet sind, dass eine drahtlose Kommunikation (3) nur zustande kommt, wenn die Antennen in einer derartigen Ausrichtung zueinander stehen, in der das Fahrzeug an der Ladestation steht, in der ein Aufladen möglich ist.

2. Ladeverfahren nach Anspruch 1, wobei im Fahrzeug (30) und an der Ladestation (10) jeweils mehr als eine Antenne angeordnet ist.

3. Ladeverfahren nach einem der Ansprüche 1 oder 2, wobei der Ladevorgang automatisch gestartet wird, sobald die Freigabe für den Ladevorgang vorliegt.

4. Ladeverfahren nach einem der Ansprüche 1 bis 3, wobei der Ladevorgang beendet wird, wenn die Parkbremse (32) des Fahrzeugs (30) deaktiviert wird.

5. Ladestation (10) zur Durchführung des Ladeverfahrens nach einem der Ansprüche 1 bis 4, wobei die Ladestation (10) eine Kommunikationseinrichtung (11) der Ladestation (10) zur drahtlosen Kommunikation (3) mit einem Fahrzeug (30) aufweist, **dadurch gekennzeichnet, dass** die Ladestation (10) eine Antenne aufweist, die eine derartige Richtcharakteristik aufweist, dass die drahtlose Kommunikation nur zustande kommt, wenn das Fahrzeug (30) in einem Bereich der Ladestation (10) steht, in der ein Aufladen möglich ist, wobei die Ladestation (10) einen ersten Kontakt (21) aufweist, der während des Ladevorgangs mit dem Fahrzeug (30) derart verbunden ist, dass der Fahrzeugaufbau (40) mit einem festgelegten Bezugspotential elektrisch verbunden ist, wobei die Ladestation (10) einen zweiten Kontakt (22) aufweist, der während des Ladevorgangs mit dem Fahrzeug (30) derart verbunden ist, dass mittels eines Stromflusses zwischen dem zweiten Kontakt (22) der Ladestation (10) und dem Fahrzeug (30) eine Kontaktierung der Ladestation (10) mit dem Fahrzeug (30) detektierbar ist, wobei mittels eines Prüfstroms, erzeugt von der Ladestation (10), über den zweiten Kontakt (22) überprüfbar ist, ob die Kontaktierung zwischen Ladestation (10) und Fahrzeug (30) durch den ersten Kontakt (21) sicher vorhanden ist, indem für den Rückstrom der erste Kontakt (21) genutzt wird, wobei die Ladestation (10) einen Stromabnehmer (25) aufweist, mit dem durch Absenken die einzelnen Kontakte (21,22,23,24) der Ladestation (10) mit entsprechenden Aufnahmekontakten (56) des Fahrzeugs (30) verbindbar sind.

6. Ladestation (10) nach Anspruch 5 wobei an der Ladestation (10) mehr als eine Antenne angeordnet ist.

7. Ladestation (10) nach einem der Ansprüche 5 oder 6, wobei die Ladestation (10) einen dritten Kontakt (23) und einen vierten Kontakt (24) aufweist, die während des Ladevorgangs mit dem Fahrzeug (30) derart verbunden sind, dass über den dritten und vierten Kontakt (23,24) elektrische Energie von der Ladestation (10) zum Energiespeicher (2) des Fahrzeugs (30) übertragbar ist.

8. Fahrzeug (30) mit einem Energiespeicher (2) zur Durchführung des Ladeverfahrens nach einem der Ansprüche 1 bis 4, wobei das Fahrzeug (30) eine Parkbremse (32) und eine fahrzeugseitige Kommunikationseinrichtung (31) aufweist, die derart miteinander verbunden sind, dass ein Signal (33) über den Zustand der Parkbremse (32) mittels der fahrzeugseitigen Kommunikationseinrichtung (31) über eine drahtlosen Kommunikation (3) an eine Ladestation (10) übertragbar ist, **dadurch gekennzeichnet, dass** das Fahrzeug (30) Aufnahmekontakte (56) zur Verbindung mit absenkbaren Kontakten (21,22,23,24) der Ladestation (10) aufweist, wobei mittels eines Prüfstroms, erzeugt von der Ladestation (10), über den zweiten Kontakt (22) überprüfbar ist, ob die Kontaktierung zwischen Ladestation (10) und Fahrzeug (30) durch den ersten Kontakt (21) sicher vorhanden ist, indem für den Rückstrom der erste Kontakt (21) genutzt wird, wobei das Fahrzeug (30) eine weitere Antenne aufweist, die eine derartige Richtcharakteristik aufweist, dass die drahtlose Kommunikation nur zustande kommt, wenn das Fahrzeug (30) in einem Bereich der Ladestation (10) steht, in der ein Aufladen möglich ist.

9. Fahrzeug (30) nach Anspruch 8, wobei das Fahrzeug (30) mehr als eine weitere Antenne aufweist.

10. System aufweisend
- mindestens eine Ladestation (10) nach einem der Ansprüche 5 bis 7 und
- mindestens ein Fahrzeug (30) nach einem der Ansprüche 8 oder 9,
wobei mit der Richtcharakteristik die drahtlose Kommunikation nur zustande kommt, wenn die Antennen in einer bestimmten Ausrichtung zueinander stehen, wobei die bestimmte Ausrichtung dann gegeben ist, wenn das Fahrzeug in einem Bereich an der Ladestation steht, in der ein Aufladen möglich ist.

11. System nach Anspruch 10, wobei das Fahrzeug (30) ein Bus ist und wobei die Ladestation (10) an einer Endhaltestelle angeordnet ist.

## Claims

1. Charging method for an energy accumulator (2) of a vehicle (30) by means of a charging station (10), wherein the charging process of the energy accumulator (2) is enabled if
- there is a wireless communication (3) between a vehicle-side communication device (31) and a communication device (11) of the charging station (10),
- a parking brake (32) of the vehicle (30) is activated, **characterized in that** the charging process of the energy accumulator (2) is enabled if
- the vehicle body (40) is connected to an electrical reference potential, in particular the ground potential, by means of an electrical connection between the charging station (10) and the vehicle (30), and
- contact between the charging station (10) and vehicle (30) is detected by means of a flow of current between the charging station (10) and vehicle (30), wherein in order to ensure protection against direct contact the vehicle body is connected to the reference potential, wherein protection against direct contact is ensured by the formation of contact between a first contact (21) of the charging station (10) and the vehicle (30), wherein by means of a test current generated by the charging station (10), it is tested, via a second contact (22), whether the contact between the charging station (10) and the vehicle (30) by means of the first contact (21) is certainly present by using the first contact (21) for the reverse current,
wherein the charging station has a current collector (25) to which the individual contacts (21, 22, 23, 24) of the charging station (10) can be connected by corresponding receiving contacts (56) of the vehicle (30) by lowering, wherein antennas, which have a directional characteristic and are arranged in such a way that wireless communication (3) comes about only if the antennas are positioned with respect to one another in a certain orientation in which the vehicle is positioned at the charging station in which charging is possible, are used both at the charging station (10) and in the vehicle (30).

2. Charging method according to Claim 1, wherein more than one antenna is respectively arranged in the vehicle (30) and at the charging station (10).

3. Charging method according to one of Claims 1 or 2, wherein the charging process is started automatically as soon as the charging process is enabled.

4. Charging method according to one of Claims 1 to 3, wherein the charging process is ended when the parking brake (32) of the vehicle (30) is deactivated.

5. Charging station (10) for carrying out the charging method according to one of Claims 1 to 4, wherein the charging station (10) has a communication device (11) of the charging station (10) for wireless communication (3) with a vehicle (30), **characterized in that** the charging station (10) has an antenna which has a directional characteristic which is such that the wireless communication comes about only if the vehicle (30) is positioned in a region of the charging station (10) in which charging is possible, wherein the charging station (10) has a first contact (21) which is connected to the vehicle (30) during the charging process in such a way that the vehicle body (40) is electrically connected to a defined reference potential, wherein the charging station (10) has a second contact (22) which is connected to the vehicle (30) during the charging process in such a way that contact between the charging station (10) and the vehicle (30) can be detected by means of a flow of current between the second contact (22) of the charging station (10) and the vehicle (30), wherein by means of a test current generated by the charging station (10) it is possible to check, via the second contact (22), whether the contact between the charging station (10) and the vehicle (30) by means of the first contact (21) is certainly present by using the first contact (21) for the reverse current, wherein the charging station (10) has a current collector (25) to which the individual contacts (21, 22, 23, 24) of the charging station (10) can be connected by corresponding receiving contacts (56) of the vehicle (30) by lowering.

6. Charging station (10) according to Claim 5, wherein more than one antenna is arranged at the charging station (10) .

7. Charging station (10) according to one of Claims 5 or 6, wherein the charging station (10) has a third contact (23) and a fourth contact (24) which are connected to the vehicle (30) during the charging process in such a way that electrical energy can be transmitted from the charging station (10) to the energy accumulator (2) of the vehicle (30) via the third and fourth contacts (23, 24).

8. A vehicle (30) having an energy accumulator (2) for carrying out the charging method according to one of Claims 1 to 4, wherein the vehicle (30) has a parking brake (32) and a vehicle-side communication device (31) which are connected to one another in such a way that a signal (33) about the state of the parking brake (32) can be transmitted to a charging station (10) via wireless communication (3) by means of the vehicle-side communication device (31), **characterized in that** the vehicle (30) has receiving contacts (56) for connecting to lowerable contacts (21, 22, 23, 24) of the charging station (10), wherein by means of a test current generated by the charging station (10) it is possible to check, via the second contact (22), whether the contact between the charging station (10) and the vehicle (30) by means of the first contact (21) is certainly present by using the first contact (21) for the reverse current, wherein the vehicle (30) has a further antenna which has a directional characteristic which is such that the wireless communication comes about only if the vehicle (30) is positioned in a region of the charging station (10) in which charging is possible.

9. Vehicle (30) according to Claim 8, wherein the vehicle (30) has more than one further antenna.

10. System comprising
- at least one charging station (10) according to one of Claims 5 to 7, and
- at least one vehicle (30) according to one of Claims 8 or 9,
wherein with the directional characteristic the wireless communication comes about only if the antennas are positioned with a specific orientation with respect to one another, wherein the specific orientation is given only if the vehicle is positioned in a region at the charging station in which charging is possible.

11. System according to Claim 10, wherein the vehicle (30) is a bus, and wherein the charging station (10) is arranged at a terminus.

## Revendications

1. Procédé de charge d'un accumulateur (2) d'énergie d'un véhicule (30) au moyen d'un poste (10) de charge, avec une validation de l'opération de charge de l'accumulateur (2) d'énergie, si
- il y a une communication (3) sans fil entre un dispositif (31) de communication du côté du véhicule et un dispositif (11) de communication du poste (10) de charge,
- un frein (32) de stationnement du véhicule (30) est activé,
**caractérisé en ce qu'**il y a validation de l'opération de charge de l'accumulateur (2) d'énergie, si
- la carrosserie (40) du véhicule est reliée, au moyen d'une liaison électrique entre le poste (10) de charge et le véhicule (30), à un potentiel électrique de référence, notamment au potentiel de terre et
- on détecte une mise en contact entre le poste (10) de charge et le véhicule (30) au moyen d'un flux de courant entre le poste (10) de charge et le véhicule (30), dans lequel, pour s'assurer de la protection au toucher, la carrosserie du véhicule est reliée au potentiel de référence, dans lequel on assure la protection au toucher par la mise en contact d'un premier contact (21) du poste (10) de charge avec le véhicule (30), dans lequel, au moyen d'un courant de contrôle produit par le poste (10) de charge, on contrôle, par l'intermédiaire d'un deuxième contact (22), si la mise en contact, entre le poste (10) de charge et le véhicule (30), par le premier contact (21) est présente d'une manière sûre, en utilisant, pour le courant de retour, le premier contact (21),
dans lequel le poste de charge a un appareil (25) de prise du courant, par lequel, par abaissement, les divers contacts (21, 22, 23, 24) du poste (10) de charge peuvent être reliés à des contacts (56) de réception correspondants du véhicule (30), dans lequel on utilise, à la fois au poste (10) de charge et dans le véhicule (30), des antennes, qui ont une caractéristique directionnelle et qui sont disposées de manière à n'avoir une communication (3) sans fil que si les antennes sont dans un alignement, l'une par rapport à l'autre, dans lequel le véhicule se trouve au poste de charge, tel qu'une charge est possible.

2. Procédé de charge suivant la revendication 1, dans lequel il est disposé plus d'une antenne, respectivement, dans le véhicule (30) et au poste (10) de charge.

3. Procédé de charge suivant l'une des revendications 1 ou 2, dans lequel on fait débuter automatiquement l'opération de charge dès qu'il y a la validation de l'opération de charge.

4. Procédé de charge suivant l'une des revendications 1 à 3, dans lequel on met fin à l'opération de charge, si on désactive le frein (32) de stationnement du véhicule (30).

5. Poste (10) de charge pour effectuer le procédé de charge suivant l'une des revendications 1 à 4, le poste (10) de charge ayant un dispositif (11) de communication du poste (10) de charge pour la communication (3) sans fil avec un véhicule (30), **caractérisé en ce que** le poste (10) de charge a une antenne, qui a une caractéristique directionnelle telle que la communication sans fil se produit seulement si le véhicule (30) se trouve dans une partie du poste (10) de charge, dans laquelle une charge est possible, le poste (10) de charge ayant un premier contact (21), qui, pendant l'opération de charge, est relié au véhicule (30), de manière à ce que la carrosserie (40) du véhicule soit reliée électriquement à un potentiel de référence fixé, le poste (10) de charge ayant un deuxième contact (22), qui, pendant l'opération de charge, est relié au véhicule (30) de manière à pouvoir, au moyen d'un flux de courant entre le deuxième contact (22) du poste (10) de charge et le véhicule (30), détecter une mise en contact du poste (10) de charge avec le véhicule (30), dans lequel, au moyen d'un courant de contrôle produit par le poste (10) de charge, il peut être contrôlé, par l'intermédiaire du deuxième contact (22), si la mise en contact entre le poste (10) de charge et le véhicule (30) par le premier contact (21) est présente d'une manière sûre, en utilisant, pour le courant de retour, le premier contact (21), le poste (21) de charge ayant un appareil (25) de prise de courant, par lequel, par abaissement, les divers contacts (21, 22, 23, 24) du poste (10) de charge peuvent être reliés à des contacts (56) de réception correspondants du véhicule (30).

6. Poste (10) de charge suivant la revendication 5, dans lequel plus d'une antenne est montée au poste (10) de charge.

7. Poste (10) de charge suivant l'une des revendications 5 ou 6, dans lequel le poste (10) de charge a un troisième contact (23) et un quatrième contact (24), qui, pendant l'opération de charge, sont reliés au véhicule (30), de manière à pouvoir, par le troisième et le quatrième contacts (23, 24), transmettre de l'énergie électrique du poste (10) de charge à l'accumulateur (2) d'énergie du véhicule (30).

8. Véhicule (30), comprenant un accumulateur (2) d'énergie pour effectuer le procédé de charge suivant l'une des revendications 1 à 4, le véhicule (30) ayant un frein (32) de stationnement et un dispositif (31) de communication du côté du véhicule, qui sont reliés entre eux de manière à pouvoir transmettre au poste (10) de charge, par une communication (3) sans fil, au moyen du dispositif (31) de communication du côté du véhicule, un signal (33) sur l'état du frein (32) de stationnement, **caractérisé en ce que** le véhicule (30) a des contacts (56) de réception pour la liaison à des contacts (21, 22, 23, 24) pouvant être abaissés du poste (10) de charge, dans lequel, au moyen d'un courant de contrôle produit par le poste (10) de charge, on peut contrôler, par l'intermédiaire du deuxième contact (22), si la mise en contact entre le poste (10) de charge et le véhicule (30) par le premier contact (21) est présente d'une manière sûre, en utilisant le courant de retour du premier contact (21), le véhicule (30) ayant une autre antenne, qui a une caractéristique directionnelle telle que la communication sans fil ne se produit que si le véhicule (30) est dans une partie du poste (10) de charge, dans laquelle une charge est possible.

9. Véhicule (30) suivant la revendication 8, dans lequel le véhicule (30) a plus qu'une autre antenne.

10. Système comportant
- au moins un poste (10) de charge suivant l'une des revendications 5 à 7 et
- au moins un véhicule (30) suivant l'une des revendications 8 ou 9,
dans lequel, par la caractéristique directionnelle, la communication sans fil n'a lieu que si les antennes sont dans un alignement défini l'une par rapport à l'autre, dans lequel l'alignement défini si le véhicule est dans une partie du poste de charge, dans laquelle une charge est possible.

11. Système suivant la revendication 10, dans lequel le véhicule (30) est un autobus et dans lequel le poste (10) de charge est à un arrêt final.
